# EUROPÄISCHE PATENTANMELDUNG

(11) **EP 0 816 392 A2**
(43) Veröffentlichungstag der Anmeldung: **07.01.1998**
(21) Anmeldenummer: 97110352.8
(22) Anmeldetag: 25.06.1997
(51) Int. Cl.: C08F 8/00, C09D 11/10

(54) **Mit Fettsäureestern modifizierte Kohlenwasserstoffharze**

(30) Priorität: 03.07.1996 DE 19626724
(71) Anmelder: Vianova Resins GmbH, 55252 Mainz-Kastel (DE)
(72) Erfinder: Bender, Albert, Dr., 55130 Mainz (DE); Giencke, Astrid, Dr., 65719 Hofheim (DE)

(57) **Zusammenfassung**

Modifiziertes Kohlenwasserstoffharz herstellbar durch Umsetzung von
A) zwei- oder mehrfach ungesättigten linearen, verzweigten oder cyclischen Kohlenwasserstoffen mit 4 bis 10 Kohlenstoffatomen sowie deren gegebenenfalls auch gemischte Oligomeren mit Polymerisationsgraden von 2 bis 10,
B) Naturharzen und/oder Naturharzsäuren,
C) α,β-olefinisch ungesättigten Carbonsäuren und/oder deren Anhydriden,
D) Verbindungen zweiwertiger Metalle,
E) Carbonsäuren, ausgewählt aus aromatischen und gesättigten aliphatischen Carbonsäuren, und
F) Fettsäureestern
wobei zunächst die Verbindungen der Gruppe A) mit Verbindungen der Gruppe B) zur Reaktion gebracht werden, und anschließend das Reaktionsprodukt mit Verbindungen aus jeder der Gruppen C), D), E) und F) bei einer Temperatur von 100 bis 300 °C unter Wasserabspaltung umgesetzt wird.

## Beschreibung

Die Erfindung betrifft mit Fettsäureestern modifizierte Kohlenwasserstoffharze aus Copolymerisaten von zwei- oder mehrfach ungesättigten linearen, verzweigten oder cyclischen Kohlenwasserstoffen mit 4 bis 10 Kohlenstoffatomen sowie deren gegebenenfalls auch gemischten Oligomeren mit Polymerisationsgraden von 2 bis 10 sowie Verfahren zu ihrer Herstellung und ihre Verwendung als Bindemittelharze in Druckfarben.

Bindemittelharze für Tiefdruckfarben mit Toluol müssen den Drucken eine rasche Trocknung, einen guten Stand auf der Oberfläche des Bedruckstoffs, eine gute Scheuerfestigkeit sowie einen hohen Glanz verleihen, Dies gilt insbesondere für nicht oder nur schwach gestrichene und daher stark saugende Naturpapiere. Besonders schwierig ist es, solche Forderungen mit niedrigviskosen Harzen zu erfüllen, da diese im allgemeinen zu stark ins Papier penetrieren. Solche Harze sind aber gerade dann erwünscht, wenn Pigmente besonders gut dispergiert oder wenn festkörperreiche und damit lösungsmittelarme Farben hergestellt werden sollen.

Es sind auch bereits niedrigviskose Harze für Toluoltiefdruckfarben auf Basis polymerisierter Kohlenwasserstoffe bekanntgeworden.

Beispielsweise sind bereits Verfahren bekannt, Naturharze mit (Co)Polymerisaten aus Kohlenwasserstoffen auf C₅-Basis, die auch als Mischpolymerisate mit Maleinsäureanhydrid oder Naturharzsäuren vorliegen können, α,β-olefinisch ungesättigten Dicarbonsäureeinheiten und Calciumverbindungen in Gegenwart von Essigsäure zu niedrigviskosen Bindemittelharzen umzusetzen (US-A 4,528,036, US-A 4,552,592).

Bekanntlich entstehen bei diesen Verfahren hochviskose Schmelzen, die zu Verkrustungen und Ablagerungen an der Kesselwandung führen, und die mit den üblicherweise im technischen Maßstab verwendeten Rühraggregaten nur schwer zu bearbeiten sind.

Zwar besitzen diese Bindemittelharze eine ausgezeichnete Dispergierwirkung für Buntpigmente, doch ist ihre Leistung in Schwarzfarben unbefriedigend, was sich im Glanzabfall der Farben äußert. Hier bilden sie nach dem Druck wenig elastische, sehr spröde Farbfilme, die dann eine ungenügende Scheuerfestigkeit besitzen. Dies ist insbesondere bei den inzwischen sehr hoch gewordenen Druckgeschwindigkeiten von mehr als 20 m/s von großem Nachteil, da es wegen der erhöhten mechanischen Belastung zum Farbabrieb und zur Verschmutzung auf den Umlenkrollen der Papierbahn kommt.

Bekannt ist auch, Fettsäuren oder Naturharzsäuren mit Dicyclopentadien unter Druck und hohen Temperaturen umzusetzen (US-A 2,522,889, US-A 2,598,425). Diese Produkte sind zwar für Lackanstriche verwendbar, sind aber als Bindemittelharze in Druckfarben für den Toluoltiefdruck unbrauchbar.

Ähnliches gilt für Produkte, die beschrieben sind in DE-B 22 46 283, und die hergestellt werden aus durch Umsetzung von Tallölfettsäure mit einem durch Polymerisation hergestellten Kohlenwasserstoffharz aus Cyclopentadien in Gegenwart von Metallsalzen und gegebenenfalls Phenolen.

Es ist auch beschrieben, Tallölfettsäure, Kolophonium, Styrol, Dicyclopentadien, Maleinsäureanhydrid und Resole in Gegenwart von Magnesiumverbindungen gleichzeitig in einer einstufig verlaufenden Reaktion bei hohen Temperaturen und Drucken umzusetzen. Die Bindemittelharze sind für Tiefdruckfarben verwendbar (DE-A 35 31 242). Sie besitzen jedoch den Nachteil, daß damit formulierte Farben bei hohen Druckgeschwindigkeiten zu langsam trocknen.

Bekannt ist auch, Copolymerisate aus Dicyclopentadien und Kolophonium, die bei Drücken von bis zu 0,9 MPa (9 bar) hergestellt werden, mit Phenol-Aldehyd-Kondensationsprodukten, aber ohne Modifikation mit α,β-olefinisch ungesättigten Carbonsäuren und deren Anhydriden, in Gegenwart einwertiger oder zweiwertiger Metallverbindungen zu Bindemittelharzen weiterzureagieren, die aber nur für Farben für den Offsetdruck geeignet sind (EP-A 0 580 954, US-A 5,376,719).

Aus DE-B 25 27 719 ist auch bekannt, Cyclopentadien, α,β-äthylenisch ungesättigte Dicarbonsäuren bzw. deren Anhydride, Harzsäuren, Metallverbindungen und gegebenenfalls Alkohole miteinander zu Bindemittelharzen für Tiefdruckfarben umzusetzen.

Hierbei wird jedoch das Cyclopentadien entweder alleine zu einem Homopolymerisat oder zusammen mit wenigstens der α,β-äthylenisch ungesättigten Dicarbonsäure zu einem Copolymerisat umgesetzt. Es ist bekannt, daß diese Homopolymerisate und Copolymerisate eine starke Wärmereaktivität besitzen und sich deshalb die nachfolgenden, bei hoher Temperatur durchgeführten Folgereaktionen nur schwer beherrschen lassen. Im technischen Maßstab durchgeführte Reaktionen mit den üblichen Kesselentleerzeiten von ca. 4 bis 6 h führen deshalb zu Produkten, deren Ungleichmäßigkeit wegen der inzwischen geforderten engen Spezifikationen nicht mehr toleriert werden kann. Dies ist ein außerordentlicher Nachteil.

Es bestand daher die Aufgabe, die Schwierigkeiten der bekannten Produkte und der bekannten Verfahren zu überwinden, und neue niedrigviskose Bindemittelharze für Toluoltiefdruckfarben zur Verfügung zu stellen, die im Vergleich zu den Harzen des Standes der Technik eine verbesserte Scheuerfestigkeit und bessere Benetzungseigenschaften in Schwarzfarben aufweisen und die bei der Herstellung eine gute thermische Stabilität besitzen.

Diese Aufgabe konnte dadurch gelöst werden, daß man zunächst zwei- oder mehrfach ungesättigte Kohlenwasserstoffe wie zum Beispiel Cyclopentadien oder Cyclopentadienverbindungen mit Naturharzen und/oder Naturharzsäuren umsetzt, dann die erhaltenen Copolymerisate mit α,β-olefinisch ungesättigten Carbonsäuren und/oder deren Anhydriden zur Reaktion bringt, mit zweiwertigen Metallverbindungen die Resinatbildung durchführt und durch Kondensation mit Fettsäureestern in Gegenwart von Carbonsäuren die gewünschten Bindemittelharze erhält. Die Verbesserung von Verfahren und Produkteigenschaften durch die getroffenen Maßnahmen gegenüber dem Stand der Technik war nicht vorhersehbar und ist deshalb als überraschend zu bezeichnen.

Gegenstand der Erfindung sind daher modifizierte Kohlenwasserstoffharze herstellbar durch Umsetzung von
A) zwei- oder mehrfach ungesättigten linearen, verzweigten oder cyclischen Kohlenwasserstoffen mit 4 bis 10 Kohlenstoffatomen sowie deren gegebenenfalls auch gemischte Oligomeren mit Polymerisationsgraden von 2 bis 10,
B) Naturharzen und/oder Naturharzsäuren,
C) α,β-olefinisch ungesättigten Carbonsäuren und/oder deren Anhydriden,
D) Verbindungen zweiwertiger Metalle,
E) Carbonsäuren, ausgewählt aus aromatischen und gesättigten aliphatischen Carbonsäuren, und
F) Fettsäureestern,
dadurch gekennzeichnet, daß die Umsetzung in mindestens zwei Stufen erfolgt, wobei in der ersten Stufe die Verbindungen der Gruppe A) mit Verbindungen der Gruppe B) zur Reaktion gebracht werden, und in den nachfolgenden Stufen jeweils das Reaktionsprodukt aus der vorigen Stufe mit jeweils mindestens einer Verbindung aus mindestens einer der Gruppen C), D), E) und F) bei einer Temperatur von 100 bis 300 °C unter Wasserabspaltung umgesetzt wird.

Als Verbindungen der Gruppen A) bis E) finden vorzugsweise Verwendung:
A) Cyclopentadien, dessen Oligomere, wie Di-, und durch Diels-Alder-Addition erhältliche Tri- und Tetramere sowie die Alkylderivate mit mindestens einer Alkylgruppe mit jeweils 1 bis 4 Kohlenstoffatomen in der Alkylgruppe oder Cooligomere dieser Verbindungen mit anderen mehrfach ungesättigten Kohlenwasserstoff-Verbindungen mit 4 bis 10, bevorzugt 4 bis 8 Kohlenstoffatomen, z.B. Methylcyclopentadien, Cyclopentadien-Isopren-Dimere, Cyclopentadien-Piperylen-Dimere.

Die betreffenden Ausgangssubstanzen brauchen keinen hohen Reinheitsgrad aufzuweisen. Es können beispielsweise Fraktionen, insbesondere konzentrierte Fraktionen, verwendet werden, die beim thermischen Dimerisieren einer C₅-Fraktion entstehen, wobei diese C₅-Fraktion als Nebenprodukt bei der thermischen Zersetzung von Naphtha und entsprechenden Erdölfraktionen anfällt. Bei einer solchen Dimerisierung wird das in einer solchen Fraktion enthaltene Cyclopentadien bzw. Methylcyclopentadien in Dicyclopentadien, Dimethyldicyclopentadien, ein Dimeres aus Cyclopentadien und Methylcyclopentadien, ein Dimeres aus Cyclopentadien und Isopren, ein Dimeres aus Cyclopentadien und Piperylen und andere ähnliche dimere Substanzen umgewandelt.

In diesen Fraktionen können noch weitere ungesättigte Monomere, wie z.B. Propylen, Buten, Butadien, Penten, Cyclopenten oder Cyclohexen enthalten sein. Auch können sogenannte C₉-Fraktionen, die als Nebenprodukt bei der Crackung von Naphtha und dergleichen entstehen, enthalten sein. Diese bestehen dann beispielsweise aus Styrol, α-Methylstyrol, Vinyltoluol, Inden, Methylinden oder Mischungen davon.

Demzufolge ist eine höhere Reinheit der Komponente A) nicht immer erforderlich, es ist jedoch bevorzugt, daß Cyclopentadieneinheiten in einem Massenanteil von 70 % oder mehr in der Mischung vorliegen,
B) Kolophonium, Wurzelharz, Tallharz sowie disproportioniertes oder partiell hydriertes oder dimerisiertes Naturharz beliebiger Provenienz, wobei die Naturharze oder Naturharzsäuren auch in untergeordneten Mengen weitere Terpene enthalten oder mit Verbindungen der Substanzgruppe C) modifiziert sein können, sowie Harzsäuren wie z.B. Abietinsäure, Lävopimarsäure, Dextropimarsäure,
C) α,β-äthylenisch ungesättigte Carbonsäuren mit mindestens einer Carboxylgruppe und 3 bis 12 Kohlenstoffatomen, insbesondere Mono- und Dicarbonsäuren mit 3 bzw. 4 bis 9 Kohlenstoffatomen oder deren Anhydride, insbesondere Fumarsäure, Maleinsäure, Maleinsäureanhydrid, Itaconsäure, Zimtsäure, Acrylsäure und Methacrylsäure,
D) Verbindungen zweiwertiger Metalle, vorzugsweise Oxide, Hydroxide, Carbonate, Hydrogencarbonate, Acetate, Stearate, Oleate, von Erdalkalimetallen und Übergangsmetallen der zweiten bis achten Nebengruppe, insbesondere des Magnesiums, Calciums und Zinks,
E) aliphatische oder aromatische Carbonsäuren, die nicht α,β-äthylenisch ungesättigt sind, wie beispielsweise Essigsäure, Hexancarbonsäure, Isononansäure, (Methyl-)Cyclohexancarbonsäure, Zitronensäure, Weinsäure, Benzoesäure, Phthal- und Isophthalsäure, Fettsäuren, wie Palmitin- oder Stearinsäure, Soja-, Leinöl-, Tallölfettsäure sowie dimere und trimere Fettsäuren,
F) tierische, pflanzliche oder durch Raffination gewonnene Fettsäureester, beispielsweise Fettsäureglycerinester, insbesondere in Form von vegetabilischen oder tierischen Ölen, beispielsweise Tallöl, Baumwollsaatöl, Sojaöl, Leinöl, Holzöl, Fischöl, Rizinusöl, Kokosfett, hydriertes Kokosfett.

Die Summe der Massenanteile der einzelnen Verbindungen aus den einzelnen Gruppen in der Reaktionsmischung beträgt vorzugsweise
A) 10 bis 90, vorzugsweise 20 bis 70, insbesondere 30 bis 60 %,
B) 10 bis 90, vorzugsweise 20 bis 70, insbesondere 30 bis 50 %,
C) 0,1 bis 20, vorzugsweise 1 bis 10, insbesondere 3 bis 8 %,
D) 0,1 bis 20, vorzugsweise 1 bis 10, insbesondere 2 bis 8%,
E) 0,1 bis 20, vorzugsweise 1 bis 10, insbesondere 2 bis 8 %,
F) 0,1 bis 40 , vorzugsweise 1 bis 30 , insbesondere 2 bis 20 %,
wobei die Summe aller Massenanteile stets 100 % ergibt.

Die Erfindung umfaßt auch ein Verfahren zur Herstellung eines modifizierten Kohlenwasserstoffharzes in mindestens zwei Stufen, bei dem in der ersten Stufe die Komponenten A) und B) zunächst bei einer Temperatur von 200 bis 300 °C, vorzugsweise 220 bis 270 °C, und unter einem Druck von 0,1 bis 1,5, vorzugsweise 0,6 bis 1 MPa (1 bis 15, vorzugsweise 6 bis 10 bar), miteinander zur Reaktion gebracht werden, und dann das erhaltene Polymerisat vorzugsweise drucklos mit den Verbindungen C), D), E) und F) in den weiteren Stufen im Temperaturbereich von 200 bis 280 °C, vorzugsweise 220 bis 270 °C, unter Wasserabspaltung umgesetzt wird, wobei in der zweiten und den weiteren Stufen jeweils das Reaktionsprodukt der vorausgegangen Stufe mit mindestens einer Verbindung aus mindestens einer der Gruppen C), D), E) und F) umgesetzt wird. Bevorzugt wird die Reaktion in zwei Stufen durchgeführt, wobei das Reaktionsprodukt der ersten Stufe in der zweiten Stufe mit jeweils mindestens einer Verbindung aus den Gruppen C), D), E) und F) umgesetzt wird.

Zur Herstellung werden die in der Naturharzchemie üblichen Apparaturen verwendet. Sie bestehen üblicherweise aus einem Stahlkessel, der mit Wärmeträgeröl beheizt werden kann, der für Druckreaktionen ausgelegt und mit einer Dosier- und Destillationsvorrichtung sowie einem Rührwerk ausgerüstet ist. Die erfindungsgemäßen Produkte können dabei nach kontinuierlichen wie auch diskontinuierlichen Verfahren hergestellt werden.

Zunächst wird diese Apparatur mit der Komponente B) beschickt, wobei auch inerte Lösungsmittel, wie z. B. Xylol mitverwendet werden können, und anschließend auf eine Temperatur von vorzugsweise 220 bis 270 °C erhitzt. Dann wird die Apparatur verschlossen und gegen den sich aufbauenden Druck die Komponente A) zudosiert. Dabei steigt der Druck auf 0,6 bis 1 MPa (6 bis 10 bar) an. Nach beendeter Reaktion, die am Druckabfall erkennbar ist, wird die Apparatur drucklos gestellt und die Komponente C) hinzugefügt, die sich während ca. einer halben Stunde Reaktionsdauer mit dem Copolymerisat umsetzt. Dann wird die Metallverbindung D) dem Ansatz hinzugefügt, was vorzugsweise bei einer Temperatur von 240 bis 260 °C erfolgt. Zweckmäßigerweise wird die Metallverbindung nicht als Feststoff, sondern in Form einer Suspension, beispielsweise mit Xylol oder bereits der Fettsäurekomponente E), zugetropft. Das dabei entstehende Wasser und weitere flüchtige Anteile werden dabei abdestilliert. Gegebenenfalls wird dann die Fettsäurekomponente E) zugetropft, wobei weiteres Wasser entsteht, das abdestilliert wird. Dann fügt man die Carbonsäure F) hinzu.

Die verwendeten Fettsäureester werden vollständig in das Harz eingebaut, wobei sich durch Art und verwendete Menge bequem die Schmelzviskosität der Ansätze steuern läßt; sie liegt bei 250 °C und einem Schergefalle von 100 s⁻¹ im allgemeinen zwischen 1 000 und 5 000 mPa·s verglichen mit bis zu ca. 15 000 mPa·s bei den Produkten des Standes der Technik. Dies ist ein außerordentlicher Vorteil.

Es ist jedoch auch möglich, die Komponenten C), D), E) und F) in anderer Reihenfolge den Ansätzen hinzuzugeben, also beispielsweise Verbindungen der Substanzgruppe F) vor der Zugabe von Verbindungen der Substanzgruppe D). In weiteren Ausführungsformen des Verfahrens ist es aber auch möglich, die Komponente C) bereits anteilig oder vollständig in die Polymerisationsreaktion mit einzubeziehen oder sie gar erst nach erfolgter Umsetzung mit den Metallverbindungen zuzugeben. Man kann aber auch als Komponente B) ein Naturharz bzw. eine Naturharzsäure einsetzen, die bereits mit der Komponente C) (α,β-ungesättigte Carbonsäuren und deren Anhydride) modifiziert sind.

Es ist leicht vorstellbar, daß noch weitere Änderungen in der Reihenfolge der Zugaben möglich sind, die jedoch durch die beschriebenen Ausführungsformen nicht eingeschränkt sein sollen.

Der Fortgang der Reaktion kann zweckmäßigerweise durch die Bestimmung der Viskositätswerte in einem Lösungsmittel, wie beispielsweise Toluol, ermittelt und dann beim gewünschten Stadium abgebrochen werden, wobei gegebenenfalls flüchtige Anteile durch kurzzeitiges Evakuieren des Ansatzes entfernt werden.

Die erfindungsgemäßen Bindemittelharze fallen nach Abkühlen der Schmelze zunächst als Feststoff an. Die Schmelze kann jedoch auch durch Zugabe von Lösungsmitteln wie Toluol oder auch Benzinfraktionen in einen Firnis überführt werden, wobei alle Übergänge von einer festen bis einer flüssigen Ausführung möglich sind.

Zur Bestimmung der Viskositäten werden üblicherweise toluolische Lösungen (Massenanteil an modifizierten Kohlenwasserstoffharz in der Lösung 50 %) mit einem üblichen Rotationsviskosimeter bei 23 °C vermessen. Die Viskositäten liegen vorzugsweise in einem Bereich von 10 bis 300 mPa·s, insbesondere 30 bis 80 mPa·s. Diese Bereiche können jedoch auch über- oder unterschritten werden.

Die molare Masse der erfindungsgemäßen Harze kann durch Gelpermeationschromatographie der Harzlösungen in Tetrahydrofuran (THF) an Polystyrolgel in einem Permeationsmeßgerät nach bekannten Methoden ermittelt werden. Die gewichtsmittlere molare Masse M_{w} der erfindungsgemäßen Harze liegt gemäß den erhaltenen Meßergebnissen vorzugsweise bei Werten von über 300 g/mol und ist nach oben nicht kritisch begrenzt. Besonders bevorzugt liegt M_{w} jedoch in einem Bereich von 500 bis 5000 g/mol.

Die erfindungsgemäßen Harze können auch während oder nach der eigentlichen Umsetzung durch Zugabe weiterer Substanzen modifiziert werden, wie es bei der Herstellung von Druckfarbenharzen üblich ist. Beispielsweise ist es möglich, niedermolekulare Verbindungen wie beispielsweise Kolophonium, Kolophoniumester, Mineralöle, oder Polymere wie Kondensationsprodukte aus Phenolen und Aldehyden, wie z. B. Resole oder Novolake, Polyester, modifizierte Kohlenwasserstoffharze, Phenolharz-modifizierte Naturharzsäureester zuzugeben, um die Lösungsviskosität zu optimieren, wie es z. B. in der deutschen Patentanmeldung DE-P 195 38 954.9 beschrieben ist. Insbesondere die Verwendung von Kolophonium als Zusatz ist vorteilhaft.

Es ist auch möglich, den Ansätzen saure Katalysatoren hinzuzufügen. Dies ist insbesondere dann interessant, wenn eine Modifizierung mit Phenolharz, Phenol oder Formaldehyd beabsichtigt ist. Als geeignete Katalysatoren seien z. B. genannt Sulfonsäuren wie Benzolmono- und -disulfonsäure, Phenolsulfonsäure, p-Toluolsulfonsäure; Beispiele für solche Verfahren sind aufgeführt in US-A 4,528,036.

Die erfindungsgemäße Arbeitsweise, das Naturharz und die Naturharzsäure B) vor den Folgereaktionen mit Cyclopentadien und Cyclopentadienverbindungen A) zu polymerisieren, hat gegenüber dem beim Stand der Technik beschriebenen Verfahren, ein Naturharz und ein Kohlenwasserstoffharzpolymerisat in die Reaktion einzusetzen (US-A 4,528,036, US-A 4,552,592), den Vorteil einer höheren Reaktivität und eines damit verbundenen höheren Umsetzungsgrades. Damit wird die Bildung oligomerer Kohlenwasserstoffharzanteile unterdrückt, die ansonsten aufgrund ihrer schlechten drucktechnischen Eigenschaften die Leistungsfähigkeit der mit diesem Bindemittelharz formulierten Farbe negativ beeinträchtigen können.

Im Vergleich zu den Harzen, die nach dem in DE-B 25 27 719 angegebenen Verfahren hergestellt werden, wobei zunächst Cyclopentadien bzw. Dicyclopentadien homopolymerisiert oder mit Maleinsäureanhydrid copolymerisiert wird, weisen die neuen erfindungsgemäßen Produkte den großen Vorteil auf, daß nach den Folgereaktionen Produkte mit ausgezeichneter Wärmestabilität entstehen.

Die beim Stand der Technik beschriebenen Verfahren (US-A 4,528,036, US-A 4,552,592) benötigen zwingend die Mitverwendung von Calciumverbindungen. Die ausschließliche Verwendung von Magnesium- oder Zinkverbindungen, wie sie bei Druckfarbenharzen erwünscht sein kann, ist aber in diesen Fällen nicht möglich, da trübe Harze und Harzlösungen resultieren , die die Produkteigenschaften stark beeinträchtigen und die Bindemittelharze sogar unbrauchbar machen können. Mit Magnesium- und Zinkverbindungen aufgebaute Harze zeigen aber häufig eine herausragende Pigmentbenetzung. Es ist ein ganz besonders großer Vorteil der Erfindung, daß sich damit erfindungsgemäße Produkte herstellen lassen, die sowohl im Festzustand wie auch in toluolischer Lösung völlig blank (d.h. ohne mit dem unbewaffneten Auge sichtbare Trübungen) sind.

Sie besitzen deshalb ein ausgezeichnetes Benetzungsverhalten für die im Illustrationstiefdruck verwendeten Pigmente. Sie vermögen insbesondere den in Schwarzfarben verwendeten Ruß, der bekanntermaßen wegen seiner unpolaren Oberfläche schlecht dispergierbar ist, ausgezeichnet zu benetzen. Weiterer Gegenstand der Erfindung ist daher die Verwendung der erfindungsgemäßen Harze als Bindemittelharze in Pigmentanreibungen und -konzentraten sowie in Druckfarben vorzugsweise für den Illustrationstiefdruck mit Toluol.

Die erfindungsgemäßen Harze weisen darüber hinaus eine ausgezeichnete Verträglichkeit mit anderen Bindemitteln, beispielsweise mit modifizierten Naturharzsäureestern, Resinaten, Kohlenwasserstoffharzen oder Chlorkautschuk auf, wodurch sie breit einsetzbar sind.

Außerdem zeichnen sie sich vorteilhaft durch einen vergleichsweise flachen Viskositätsverlauf beim Verdünnen mit Toluol aus, ihre Viskosität nimmt also auch bei steigendem Harzgehalt nur wenig zu. Diese Eigenschaft ist beim Dispergiervorgang besonders wichtig, da die Pigmente möglichst viel Harz für eine optimale Benetzung benötigen, die entstehenden Konzentrate und Anreibungen aber immer noch gut fließfähig, d. h. niedrigviskos sein sollen. Dies macht sie insbesondere auch überlegen gegenüber Bindemittelharzen des Standes der Technik, da diese ein wesentlich ungünstigeres Verdünnungsverhalten zeigen. Dieses unterschiedliche Verhalten der Bindemittelharze ist als außerordentlich überraschend zu bezeichnen.

Die Toluol enthaltenden Tiefdruckfarben werden nach den üblichen Methoden formuliert. Dazu wird das geeignete Bindemittelharz in Toluol gelöst und dieser Firnis mit Hilfe eines Dispergieraggregats pigmentiert oder eine vorab hergestellte Pigmentanreibung mit Toluol verdünnt. Als Zuschlagstoffe können beispielsweise Füllstoffe wie Calciumcarbonat oder grenzflächenaktive Mittel zur Verbesserung der Pigmentdispersion wie Lecithin oder Wachse zur Verbesserung der Scheuerfestigkeit, mitverwendet werden.

Weiterer Gegenstand der Erfindung ist die Verwendung der erfindungsgemäßen Harze als Bindemittelharze in Druckfarben für den Offsetdruck und den Buchdruck, wo sie überraschenderweise gleichfalls einsetzbar sind, und wo sie insbesondere in Gelform als Gelfirnisse sehr vorteilhaft verwendbar sind. Die Herstellung der Gelfirnisse erfolgt vorzugsweise durch Reaktion der Bindemittelharze mit Aluminiumverbindungen, wie z.B. Aluminiumalkoholat oder mit Acetessigester stabilisiertem Aluminiumalkoholat nach bekannten Verfahrensweisen in hochsiedendem Mineralöl. Die Gelfirnisse werden gegebenenfalls mit weiteren Bindemittelharzen, wie z.B. Phenolharz-modifizierten Kolophoniumharzen, vegetabilischen Ölen, Wachsen, Füllstoffen, Sikkativen und weiteren Zusatzstoffen vermischt und durch Pigmentierung die für den Offsetdruck und Buchdruck verwendbaren Druckfarben erhalten, die sich u.a. bei den in Druckmaschinen auftretenden Arbeitstemperaturschwankungen in einem sehr breiten Bereich weitgehend unempfindlich in ihrem Viskositätsverhalten zeigen und auch nicht unlöslich werden, was außerordentlich vorteilhaft ist.

Zur Ermittlung der Mineralölverträglichkeit bzw. der Klarlöslichkeit in Mineralöl der erfindungsgemäßen Harze werden diese jeweils bei 180 °C in standardisiertem Mineralöl (Siedebereich 240 bis 270 °C, Anilinpunkt 72 °C) zu Klaren Harzlösungen mit einem Massenanteil von Harz in der Lösung von 35 % gelöst, die Lösungen auf 23 °C abgekühlt und sogleich unter Rühren bis zum Auftreten einer Trübung (Trübungspunkt) mit demselben Mineralöl titriert. Das am Trübungspunkt in der Lösung vorliegende Verhältnis der Masse an Harz zur Masse an Mineralöl (1:X) wird als Verträglichkeit bzw. Klarlöslichkeitsendpunkt bezeichnet. Analog dazu wird die Verträglichkeit in Leinöl bestimmt.

Wegen ihrer guten Verträglichkeit mit Aliphaten sind die erfindungsgemäßen neuen modifizierten Kolophoniumharze auch in Kombination mit niedrigsiedenden Benzinfraktionen einsetzbar, wie sie z.B. im Illustrationstiefdruck mit Benzin verwendet werden. Weiterer Gegenstand der Erfindung ist daher die Verwendung der erfindungsgemäßen Harze als Bindemittelharze in Druckfarben für den Illustrationstiefdruck mit Benzin als Lösungsmittel.

Diese breite Einsetzbarkeit der neuen Verbindungen für derart unterschiedliche Druckverfahren wie Offset-, Buch- und Tiefdruck bedeutet einen ganz besonders wichtigen Vorteil und eine außerordentliche Verbesserung gegenüber den Harzen des Standes der Technik.

Die Erfindung wird durch die nachfolgenden Beispiele näher erläutert, ohne sie jedoch einzuschränken. Gehalts- und Konzentrations-Angaben in Teilen oder Prozent in den Beispielen sind stets Massenanteile, soweit nicht anders vermerkt.

Die angegebenen Säurezahlen werden nach DIN 53 402 gemessen. Die Angabe erfolgt üblicherweise in der Einheit "mg/g". Die Säurezahl ist definiert als der Quotient der zur Neutralisation einer bestimmten Masse *m*_{B} der Probesubstanz erforderlichen Masse an Kaliumhydroxid *m*_{KOH} und der Masse der (unverdünnten) Probe *m*_{B}.

Die Lösungsviskositäten in den nachfolgenden Beispielen werden an toluolischen Lösungen mit einem Massenanteil an Harz in der Lösung von 50 % bei einer Temperatur von 23 °C bestimmt.

### Beispiel 1

In einer 2 l-Druckapparatur werden 215 g Kolophonium auf 260 °C erhitzt. Dazu werden innerhalb 2 h 430 g technisches Dicyclopentadien mit einem Gehalt von 75 % Cyclopentadien-Einheiten zudosiert und weitere 5 h unter Rühren bei dieser Temperatur gehalten; dabei bildet sich der zunächst auf 0,9 MPa (9 bar) gestiegene Druck auf 0,5 MPa (5 bar) zurück. Dann wird auf Normaldruck entspannt, 210 g Kolophonium und 45 g Maleinsäureanhydrid zugegeben und ein halbe Stunde nachgerührt. Dann werden 36 g Calciumhydroxid, suspendiert in 50 g Xylol, während einer Stunde zudosiert, wobei das entstehende Wasser und weitere flüchtige Anteile abdestilliert werden. Man rührt noch eine halbe Stunde nach und dosiert anschließend während 20 min 30 g Holzöl und anschließend 10 g Essigsäure zu. Man rührt noch eine weitere Stunde nach, evakuiert dann 5 min bei 10 kPa (100 mbar), stellt drucklos und entleert den Ansatz. Es werden 911 g Harz mit dem Erweichungspunkt 155 °C und einer Lösungsviskosität von 73 mPa·s (50 % in Toluol/23 °C) erhalten.
In Mineralöl vom Siedebereich 240 bis 270 °C (Anilinpunkt 72°C) besitzt das Harz eine Verträglichkeit von besser als 1 : 5 und in Leinöl von mindestens 1 : 2,5.
Das Harz besitzt bei 250 °C und einem Schergefalle von 100 s⁻¹ eine Schmelzeviskosität von 3 900 mPa·s.

### Beispiel 2

In einer 2 l-Druckapparatur werden 420 g Kolophonium auf 260 °C erhitzt. Dazu werden innerhalb 2 h 490 g Dicyclopentadien mit einem Gehalt von 75 % Cyclopentadien-Einheiten zudosiert und weitere 5 h unter Rühren bei dieser Temperatur gehalten; dabei bildet sich der zunächst auf 0,9 MPa (9 bar) gestiegene Druck auf 0,5 MPa (5 bar) zurück. Dann wird auf Normaldruck entspannt und 45 g Maleinsäureanhydrid (MSA) zugegeben und ein halbe Stunde nachgerührt. Dann werden 19 g Magnesiumoxid, suspendiert in 50 g Xylol, während einer Stunde zudosiert, wobei das entstehende Wasser und weitere flüchtige Anteile abdestilliert werden. Man rührt noch eine halbe Stunde nach und dosiert anschließend während 20 min 60 g Holzöl und anschließend 10 g Essigsäure zu. Man rührt noch eine weitere Stunde nach, evakuiert dann 5 min bei 10 kPa (100 mbar), stellt drucklos und entleert den Ansatz. Es werden 975 g Harz mit dem Erweichungspunkt 167 °C, einer Lösungsviskosität von 56 mPa·s (50 % in Toluol/23 °C) und einer Säurezahl von 56 mg/g erhalten. Das Harz besitzt bei 250 °C und einem Schergefälle von 100 s⁻¹ eine Schmelzeviskosität von 2 800 mPa·s.

Eine für eine Dauer von 5 h bei 250 °C gehaltene Probe besitzt eine Lösungsviskosität von 59 mPa·s, d.h. das Harz hat keine nennenswerte Wärmereaktivität.

### Beispiel 3

Analog zu Beispiel 2 werden 420 g Kolophonium mit 490 g Dicyclopentadien zum Copolymerisat und dieses anschließend mit 45 g MSA, 38 g Zinkoxid, 60 g Holzöl und 10 g Essigsäure zum Produkt umgesetzt. Es werden 970 g Harz mit dem Erweichungspunkt 152 °C, einer Lösungsviskosität von 40 mPa·s (50 % in Toluol/23 °C) und einer Säurezahl von 65 mg/g erhalten.

### Beispiel 4

Analog zu Beispiel 1 werden 210 g Kolophonium mit 490 g Dicyclopentadien zum Copolymerisat und dann mit 210 g Kolophonium, 45 g MSA, 35 g Calciumhydroxid, 20 g hydriertem Kokosfett und 10 g Essigsäure zum Produkt umgesetzt.
Es werden 948 g Harz mit dem Erweichungspunkt 166 °C, einer Lösungsviskosität von 45 mPa·s (50 % in Toluol/23 °C) und einer Säurezahl von 25 mg/g erhalten.

### Beispiel 5

In einer 2 l-Druckapparatur werden 210 g Kolophonium auf 260 °C erhitzt. Dazu werden innerhalb 2 h 490 g Dicyclopentadien mit einem Gehalt von 75 % Cyclopentadien-Einheiten zudosiert und weitere 5 h unter Rühren bei dieser Temperatur gehalten; dabei bildet sich der zunächst auf 0,9 MPa (9 bar) gestiegene Druck auf 0,5 MPa (5 bar) zurück. Dann wird auf Normaldruck entspannt, 210 g Sojaöl und danach 45 g Maleinsäureanhydrid zugegeben und ein halbe Stunde nachgerührt. Dann werden 30 g Calciumhydroxid, suspendiert in 50 g Xylol, während einer Stunde zudosiert, wobei das entstehende Wasser und weitere flüchtige Anteile abdestilliert werden. Man rührt noch eine halbe Stunde nach und dosiert anschließend während 20 min 10 g Essigsäure zu. Man rührt noch eine weitere Stunde nach, hält dann 5 min bei 10 kPa (100 mbar), stellt drucklos und entleert den Ansatz. Es werden 920 g Harz mit dem Erweichungspunkt 148 °C und einer Lösungsviskosität von 605 mPa·s (50 % in Toluol/23 °C) und der Säurezahl 9 mg/g erhalten.

### Beispiel 6

In einer 2 l-Druckapparatur werden 210 g Kolophonium auf 260 °C erhitzt. Dazu werden innerhalb 2 h 490 g Dicyclopentadien mit einem Gehalt von 75 % Cyclopentadien-Einheiten zudosiert und weitere 5 h unter Rühren bei dieser Temperatur gehalten; dabei bildet sich der zunächst auf 0,9 MPa (9 bar) gestiegene Druck auf 0,5 MPa (5 bar) zurück. Dann wird entspannt, 210 g Sojaöl und danach 45 g Maleinsäureanhydrid zugegeben und ein halbe Stunde nachgerührt. Dann werden 30 g Calciumhydroxid, suspendiert in 50 g Xylol, während einer Stunde zudosiert, wobei das entstehende Wasser und weitere flüchtige Anteile abdestilliert werden. Man rührt noch eine halbe Stunde nach und setzt dem Ansatz anschließend 20 g Benzoesäure zu. Man rührt noch eine weitere Stunde nach, hält dann 5 min bei 10 kPa (100 mbar), stellt drucklos und entleert den Ansatz. Es werden 925 g Harz mit dem Erweichungspunkt 148 °C und einer Lösungsviskosität von 590 mPa·s (50 % in Toluol/23 °C) und der Säurezahl 11 mg/g erhalten.

### Beispiel 7

In einer 2 l-Druckapparatur werden 420 g Kolophonium auf 260 °C erhitzt. Dazu werden innerhalb 2 h 490 g Dicyclopentadien mit einem Gehalt von 75 % Cyclopentadien-Einheiten zudosiert und weitere 5 h unter Rühren bei dieser Temperatur gehalten; dabei bildet sich der zunächst auf 0,9 MPa (9 bar) gestiegene Druck auf 0,6 MPa (5 bar) zurück. Dann wird entspannt und 45 g Maleinsäureanhydrid zugegeben und ein halbe Stunde nachgerührt. Dann werden 45 g eines nach den üblichen Methoden hergestellten Resols aus p-tert.Butylphenol und Formaldehyd (70 % in Wasser, Viskosität 250 mPa·s) zugetropft und anschließend 23 g Magnesiumoxid zudosiert, wobei das entstehende Wasser und weitere flüchtige Anteile abdestilliert werden. Man rührt noch eine halbe Stunde nach und setzt dem Ansatz 60 g Sojaöl und anschließend 10 g Benzoesäure zu. Man rührt noch eine weitere Stunde nach, hält dann 5 min bei 10 kPa (100 mbar), stellt drucklos und entleert den Ansatz. Es werden 974 g Harz mit dem Erweichungspunkt 167 °C, einer Lösungsviskosität von 95 mPa·s (50 % in Toluol/23 °C) und der Säurezahl 50 mg/g erhalten.

### Vergleichsbeispiel 1

Nach US-A 4,552,592 wird analog Beispiel 3 ein Bindemittelharz mit der Lösungsviskosität 115 mPa·s (50 % in Toluol/23 °C) hergestellt. Das Harz besitzt bei 250 °C und einem Schergefälle von 100 s⁻¹ eine Schmelzeviskosität von 12 400 mPa·s.

### Vergleichsbeispiel 2

Nach US-A 4,552,592 wird analog Beispiel 3 ein Bindemittelharz hergestellt, bei dem der Calciumhydroxid-Einstand durch die äquivalente Menge Magnesiumhydroxid ersetzt wird. Es wird ein trübes Harz erhalten, das sich nicht vollständig in Toluol lösen läßt.

### Anwendungstechnisches Beispiel 1

Nach üblichen Verfahren werden jeweils aus den Bindemittelharzen der Beispiele 2 (Farbe A), 3 (Farbe B) sowie 4 (Farbe C) und des Vergleichsbeispiels 1 (Farbe D) nach den üblichen Methoden durch Dispergieren einer Mischung von
- 30 g: Bindemittelharz
- 9 g: Ruß ®Printex 300 (Degussa AG)
- 61 g: Toluol

Farben für den Illustrationstiefdruck hergestellt und im Tiefdruckverfahren damit stark saugendes Naturpapier bedruckt.

Der Glanz der Andrucke, der für ein gutes drucktechnisches Ergebnis möglichst hoch sein sollte, wird sodann mit dem Laborreflektometer nach Lange bei einem Einstrahlwinkel von 60° gemessen.

Die Scheuerfestigkeit der Druckfilme wird mit dem Gerät Prüfbau-Quadrant bei 50 Hüben und einer Belastung von 600 g bestimmt und mit Noten von 1 bis 6 bewertet. 1 bedeutet dabei eine sehr gute, 6 eine sehr schlechte Scheuerfestigkeit.

| Farbe | A | B | C | D |
|---|---|---|---|---|
| Glanz in % | 18,5 | 19 | 18,5 | 14 |
| Scheuerfestigkeit | 2 | 2 | 2 | 5 |

Die erfindungsgemäßen Produkte erweisen sich bezüglich Dispergierwirkung für Ruß und der daraus resultierenden Glanzentwicklung der Farben wie auch der Scheuerfestigkeit dem Bindemittelharz des Standes der Technik überlegen.

### Anwendungstechnisches Beispiel 2

Nach üblichen Verfahren werden aus dem Bindemittelharz des Beispiels 2 durch Dispergieren einer Mischung von
- 40 g: Bindemittelharz
- 12 g: Ruß ®Printex 55 (Degussa AG)
- 48 g: Mineralöl mit dem Siedebereich 280 bis 310 °C
auf dem Dreiwalzenstuhl eine Farbe mit der Viskosität 80 dPa·s für den Offsetdruck hergestellt. Offsetpapier läßt sich mit dieser Farbe in guter Qualität bedrucken.

## Patentansprüche

1. Modifiziertes Kohlenwasserstoffharz herstellbar durch Umsetzung von
A) zwei- oder mehrfach ungesättigten linearen, verzweigten oder cyclischen Kohlenwasserstoffen mit 4 bis 10 Kohlenstoffatomen sowie deren gegebenenfalls auch gemischte Oligomeren mit Polymerisationsgraden von 2 bis 10,
B) Naturharzen und/oder Naturharzsäuren,
C) α,β-olefinisch ungesättigten Carbonsäuren und/oder deren Anhydriden,
D) Verbindungen zweiwertiger Metalle,
E) Carbonsäuren, ausgewählt aus aromatischen und gesättigten aliphatischen Carbonsäuren, und
F) Fettsäureestern
dadurch gekennzeichnet, daß die Umsetzung in mindestens zwei Stufen erfolgt, wobei in der ersten Stufe die Verbindungen der Gruppe A) mit Verbindungen der Gruppe B) zur Reaktion gebracht werden; und in den nachfolgenden Stufen jeweils das Reaktionsprodukt aus der vorigen Stufe mit jeweils mindestens einer Verbindung aus mindestens einer der Gruppen C), D), E) und F) bei einer Temperatur von 100 bis 300 °C unter Wasserabspaltung umgesetzt wird.

2. Modifiziertes Kohlenwasserstoffharz nach Anspruch 1, dadurch gekennzeichnet, daß die Summe der Massenanteile der einzelnen Verbindungen aus den einzelnen Gruppen in der Reaktionsmischung
A) 10 bis 90 %,
B) 10 bis 90 %,
C) 0,1 bis 20 %,
D) 0,1 bis 20 %,
E) 0,1 bis 20%,
F) 0,1 bis 40 %.
beträgt, wobei die Summe der Massenanteile stets 100 % ergibt.

3. Modifiziertes Kohlenwasserstoffharz nach Anspruch 1, dadurch gekennzeichnet, daß die Umsetzung der Komponenten A) und B) in der ersten Stufe bei Drücken von 0,1 bis 1,5 MPa (1 bis 15 bar) erfolgt und die nachfolgende Umsetzung in den folgenden Stufen mit den Komponenten C), D) und E) drucklos.

4. Modifiziertes Kohlenwasserstoffharz nach Anspruch 1, dadurch gekennzeichnet, daß die Reaktion im Temperaturbereich von 220 bis 270 °C durchgeführt wird.

5. Modifiziertes Kohlenwasserstoffharz nach Anspruch 1, dadurch gekennzeichnet, daß als zwei- oder mehrfach ungesättigte lineare, verzweigte oder cyclische Kohlenwasserstoffe mit 4 bis 10 Kohlenwasserstoffatomen Cyclopentadien und/oder Dicyclopentadien eingesetzt werden.

6. Modifiziertes Kohlenwasserstoffharz nach Anspruch 1, dadurch gekennzeichnet, daß als zwei- oder mehrfach ungesättigte lineare, verzweigte oder cyclische Kohlenwasserstoffe mit 4 bis 10 Kohlenwasserstoffatomen Cyclopentadien und/oder Dicyclopentadien im Gemisch mit gegebenenfalls Piperylen, gegebenenfalls Styrol und gegebenenfalls Inden eingesetzt werden

7. Modifiziertes Kohlenwasserstoffharz nach Anspruch 1, dadurch gekennzeichnet, daß als zweiwertige Metallverbindungen Calcium-, Magnesium- oder Zinkverbindungen verwendet werden.

8. Modifiziertes Kohlenwasserstoffharz nach Anspruch 1, dadurch gekennzeichnet, daß als zweiwertige Metallverbindungen Oxide oder Hydroxide eingesetzt werden.

9. Modifiziertes Kohlenwasserstoffharz nach Anspruch 1, dadurch gekennzeichnet, daß die zweiwertige Metallverbindung eine Calciumverbindung ist.

10. Modifiziertes Kohlenwasserstoffharz nach Anspruch 1, dadurch gekennzeichnet, daß die zweiwertige Metallverbindung eine Magnesiumverbindung ist.

11. Modifiziertes Kohlenwasserstoffharz nach Anspruch 1, dadurch gekennzeichnet, daß die zweiwertige Metallverbindung eine Zinkverbindung ist.

12. Modifiziertes Kohlenwasserstoffharz nach Anspruch 1, dadurch gekennzeichnet, daß ein oder mehrere Kondensationsprodukte aus Phenolen und Aldehyden zugesetzt werden.

13. Modifiziertes Kohlenwasserstoffharz nach Anspruch 1, dadurch gekennzeichnet, daß seine durch Gelpermeationschromatographie an Polystyrol ermittelte gewichtsmittlere molare Masse M_{w} zwischen 500 und 5000 g/mol liegt.

14. Modifiziertes Kohlenwasserstoffharz nach Anspruch 1, dadurch gekennzeichnet, daß seine Schmelzviskosität bei 250 °C und einem Schergefälle von 100 s⁻¹ zwischen 1 000 und 5 000 mPa·s liegt.

15. Verfahren zur Herstellung von modifizierten Kohlenwasserstoffharzen, dadurch gekennzeichnet, daß die Umsetzung in zwei Stufen erfolgt, und daß in der ersten Stufe die Verbindungen der Gruppe A) mit Verbindungen der Gruppe B) zur Reaktion gebracht werden , und in der zweiten Stufe das Reaktionsprodukt aus der ersten Stufe mit jeweils mindestens einer Verbindung aus mindestens einer der Gruppen C), D), E) und F) bei einer Temperatur von 100 bis 300 °C unter Wasserabspaltung umgesetzt wird.

16. Verwendung der modifizierten Kohlenwasserstoffharze in Pigmentkonzentraten.

17. Verwendung der modifizierten Kohlenwasserstoffharze in Druckfarben.

18. Verwendung der modifizierten Kohlenwasserstoffharze in Druckfarben für den Offsetdruck.

19. Verwendung der modifizierten Kohlenwasserstoffharze in Druckfarben für den Tiefdruck mit Benzin.

20. Verwendung der modifizierten Kohlenwasserstoffharze in Druckfarben für den Toluoltiefdruck.
